# EUROPÄISCHE PATENTSCHRIFT

(11) **EP 3 413 765 B1**
(45) Veröffentlichungstag und Bekanntmachung des Hinweises auf die Patenterteilung: **20.11.2019**
(21) Anmeldenummer: 17700403.3
(22) Anmeldetag: 12.01.2017
(51) Int. Cl.: A47J 31/41, A47J 31/44

(54) **BEISTELLGERÄT FÜR GETRÄNKEAUSGABEAUTOMATEN**
SUPPLY DEVICE FOR BEVERAGE-DISPENSING MACHINES
APPAREIL RAPPORTÉ POUR DES DISTRIBUTEURS DE BOISSONS

(30) Priorität: 10.02.2016 DE 102016102347
(43) Veröffentlichungstag der Anmeldung: 19.12.2018
(73) Patentinhaber: FRANKE Kaffeemaschinen AG, 4663 Aarburg (CH)
(72) Erfinder: TURI, Mariano, 8046 Zürich (CH); VETTERLI, Heinz, 8855 Wangen (CH)
(74) Vertreter: Lemcke, Brommer & Partner Patentanwälte Partnerschaft mbB
(86) Internationale Anmeldenummer: PCT/EP2017/050529
(87) Internationale Veröffentlichungsnummer: WO 2017/137204

(56) Entgegenhaltungen:
- EP-A1- 2 386 229
- EP-A2- 2 020 198
- DE-A1-102012 211 270

## Beschreibung

Die vorliegende Erfindung betrifft ein Beistellgerät für einen oder mehrere Getränkeausgabeautomaten, welches zum Aufbewahren, Temperieren und Zuführen eines flüssigen Lebensmittels dient, das über den oder die Getränkeausgabeautomaten ausgebbar ist.

Bei Getränkeausgabeautomaten zur Ausgabe von heißen oder kalten Getränken erfolgt häufig eine Ausgabe bzw. Beimischung von flüssigen Lebensmitteln, die gekühlt gelagert werden müssen. Dies trifft insbesondere bei Kaffeevollautomaten zu, die neben frisch gebrühten Kaffeegetränken auch Milch oder milchhaltige Getränke ausgeben. So wird beispielsweise bei einem Cappuccino oder Latte Macchiato dem frisch gebrühten Kaffee aufgeschäumte Milch zugegeben. Die Lagerung der Milch muss hierbei in einem Kühlraum erfolgen, damit die Milch nicht verdirbt. Andererseits ist vor allem bei der Herstellung von Milchschaum die Milchtemperatur von entscheidender Bedeutung. Bereits geringe Abweichungen von der idealen Milchtemperatur führen zu einer Verschlechterung der Milchschaumkonsistenz.

Insbesondere bei Kaffeevollautomaten ist bekannt, die Milch in einer separaten, als Beistellgerät ausgebildeten Kühleinheit aufzubewahren. Ein solcher als Beistellgerät ausgebildeter Milchkühler für eine Getränkezubereitungsmaschine ist beispielsweise aus der EP 2 386 299 A1 bekannt. Gerade im professionellen Bereich werden häufig mehrere Kaffeevollautomaten parallel betrieben. Hierbei ist es vorteilhaft, zur Aufbewahrung und Kühlung der Milch ein gemeinsames Beistellgerät vorzusehen.

Bei herkömmlichen Kühleinheiten bzw. bei Kühlschränken bekannter Bauart erfolgt die Kühlung des Kühlgutes durch Kühlung des Kühlschrankinnenraums. Der Wärmeabtransport erfolgt hierbei vor allem durch Konvektion über das Luftvolumen zwischen den gekühlten Kühlschrankwänden und dem im Kühlschrank eingelagerten Kühlgut. Die DE 10 2012 211 270 zeigt einen Kühlschrank mit zwei Kühlfächern, die über separate Verdampfer gekühlt werden. Die Kühlleistung der Verdampfer kann über Ventile geregelt werden.

Wird eine gemeinsame Kühleinheit als Beistellgerät für mehrere Getränkeausgabeautomaten eingesetzt, so sollte im Kühlraum der Kühleinheit für jeden Getränkeausgabeautomat ein eigener Vorratsbehälter vorgehalten werden. Ist ein Vorratsbehälter leer, so muss er aufgefüllt oder durch einen frischen Vorratsbehälter (z.B. einen neuen Milchkarton) ersetzt werden. Die Temperatur des aufgefüllten bzw. frisch eingesetzten Flüssiglebensmittels gleicht sich hierbei nur langsam an die Temperatur des Kühlschranks ans. Es dauert somit einige Zeit, bis das frische Lebensmittel die Soll-Temperatur erreicht hat.

Alternativ könnte in einer Abkühlphase die Kühlleistung der Kühleinheit erhöht werden. Hierbei würden jedoch die übrigen Lebensmittelbehälter ebenfalls stärker abgekühlt, so dass die Lebensmitteltemperatur in diesen unter die Soll-Temperatur fiele und im Extremfall das flüssige Lebensmittel sogar einfrieren könnte.

Die vorliegende Erfindung hat sich daher zur Aufgabe gestellt, ein Beistellgerät der eingangs genannten Art für zwei oder mehr Vorratsbehälter anzugeben, bei dem die Temperatur flüssiger Lebensmittel in den separaten Vorratsbehältern schneller an eine Soll-Temperatur angeglichen werden kann.

Die Aufgabe wird gelöst durch die Merkmale des Anspruchs 1. Vorteilhafte Ausführungen sind den abhängigen Ansprüchen zu entnehmen.

Ein erfindungsgemäßes Beistellgerät umfasst einen Aufnahmeraum zum Einstellen von mindestens zwei Vorratsbehältern für Flüssiglebensmittel, insbesondere Milch, die über Lebensmittelleitungen mit einem oder mehreren Getränkeausgabeautomaten verbindbar sind. Das Beistellgerät besitzt eine Kühlvorrichtung zum Temperieren von in den Vorratsbehältern befindlichen flüssigen Lebensmitteln auf eine vorgebbare Soll-Temperatur. Für jeden der Lebensmittelbehälter ist je eine wärmeleitende, insbesondere metallische Kontaktfläche vorgesehen, die bei eingestelltem Vorratsbehälter mit einer wärmeleitenden Außenwand, insbesondere Bodenfläche, des betreffenden Vorratsbehälters in wärmeleitendem Kontakt steht, um den Inhalt des Vorratsbehälters zu kühlen. Außerdem sind die wärmeleitenden Kontaktflächen hierbei über jeweils getrennt regelbare Kühlkreisläufe von der Kühlvorrichtung kühlbar.

Erfindungsgemäß erfolgt somit die Kühlung der flüssigen Lebensmittel nicht über Konvektion sondern über Wärmeleitung (Konduktion) durch direkten Kontakt zwischen der wärmeleitenden Außenwand des Vorratsbehälters und der von der Kühlvorrichtung gekühlten Kontaktfläche im Kühlraum. Die Wärmeleitung ist vor allem bei metallischer Kontaktfläche bzw. metallischer Außenwand des Vorratsbehälters besonders effektiv. Aus hygienischen bzw. lebensmitteltechnischen Gründen ist Edelstahl als Material für die Außenwand des Vorratsbehälters bevorzugt.

Des Weiteren sind für die Kontaktflächen bzw. Kühlflächen im Inneren des Aufnahmeraums getrennt regelbare Kühlkreisläufe vorgesehen. Somit kann die Temperatur in jeden der Vorratsbehälter getrennt und unabhängig von der Temperatur in den übrigen Vorratsbehältern geregelt und die Kühlleistung für die jeweilige Kontaktfläche entsprechend angepasst werden.

Vorzugsweise kann außerdem jede der wärmeleitenden Kontaktflächen mit einem Temperatursensor zur Bestimmung der Ist-Temperatur im zugehörigen Lebensmittelbehälter versehen werden. Dieser ermöglicht auf einfache Weise eine Regelung der über die Kontaktfläche von der Kühlvorrichtung zugeführten Kühlleistung. Alternativ könnte die Temperatur des flüssigen Lebensmittels auch direkt gemessen werden, beispielsweise mittels eines Temperatursensors in der vom Vorratsbehälter wegführenden Lebensmittelleitung. Da jedoch die Wärmeangleichung zwischen Kontaktfläche und dem flüssigen Lebensmittel durch die Wärmeleitung über die Außenwand des Vorratsbehälters sehr schnell und effizient erfolgt, ermöglicht ein Temperatursensor an der Kontaktfläche eine ausreichend genaue Bestimmung der Ist-Temperatur und Regelung der Kühlleistung, ohne dass der Temperatursensor selbst mit dem flüssigen Lebensmittel in Kontakt gebracht werden müsste. Eine derartige Anordnung ist somit wesentlich hygienischer und einfacher zu reinigen als ein Temperatursensor, der in direktem Kontakt mit dem flüssigen Lebensmittel steht.

Bei einer bevorzugten Ausführungsform kann die Kühlvorrichtung in an sich bekannter Weise als Kompressionskältemaschine ausgeführt sein. Hierbei ist es vorteilhaft, einen gemeinsamen Verdichter (Kompressor) für die getrennten Kühlkreisläufe vorzusehen sowie separate Verdampfer in jedem der getrennten Kühlkreisläufe. Eine getrennte Regelung der Kühlkreisläufe kann hierbei beispielsweise über Ventile erfolgen, über die ein Kühlkreislauf, in welchem gerade nicht gekühlt werden soll, vom Verdichter abgetrennt oder alternativ die Kühlleistung durch Drosselung der Kühlmittelzufuhr reduziert werden kann.

Bei einer weiteren vorteilhaften Ausführungsform ist außerdem eine Steuereinheit vorgesehen, die mit einer korrespondierenden Steuereinheit der ein oder mehreren Getränkeausgabeautomaten verbunden ist, und die ein Signal zur Produktsperrung sendet, so lange in einem zugehörigen Vorratsbehälter eine von einer vorgebbaren Soll-Temperatur abweichende Produkttemperatur herrscht, und/oder wenn eine im Vorratsbehälter verbliebene Produktmenge eine vorgebbare Mindestmenge unterschreitet, der Vorratsbehälter leer ist oder das flüssige Lebensmittel zumindest zuneige zu gehen droht.

Am zugehörigen Getränkeausgabeautomat kann somit ein Signal an einen Bediener ausgegeben werden, das flüssige Lebensmittel aufzufüllen. Solange frisch aufgefülltes flüssiges Lebensmittel nicht die vorgegebene Soll-Temperatur erreicht hat, kann außerdem der Produktbezug gesperrt werden. Dies ist beispielsweise sinnvoll wenn Milchschaum ausgegeben werden soll, die Milch aber noch nicht die zur Milchschaumerzeugung notwendige Temperatur erreicht ist. Somit wird vermieden, dass Milchschaum minderwertiger Qualität bzw. Konsistenz ausgegeben wird, weil beim Aufschäumvorgang die Milchtemperatur zu hoch ist.

Außerdem ist im Rahmen der vorliegenden Erfindung vorgesehen, dass das beistellgerät mit einer Anzeigevorrichtung versehen ist, auf welcher an den jeweiligen Kontaktflächen gemessene Ist-Temperaturwerte anzeigbar sind.

Bei einer weiteren Ausführungsform kann für jeden der Vorratsbehälter je eine Pumpe zum Fördern des flüssigen Lebensmittels vorgesehen sein. Außerdem können Halteelemente und/oder Andruckelemente vorgesehen sein, um die Vorratsbehälter gegen ihre zugehörigen Kontaktflächen zu halten. Der Aufnahmeraum kann außerdem durch Trennwände in einzelne Aufnahmefächer unterteilt sein.

Weitere bevorzugte Merkmale und Ausführungsformen werden im Folgenden anhand von Ausführungsbeispielen und den Figuren erläutert. Dabei zeigt
- Fig. 1: zwei Kaffeevollautomaten mit einer gemeinsamen Kühleinheit in Form eines Beistellgerätes,
- Fig. 2: eine Draufsicht auf die Kaffeevollautomaten und das Beistellgerät aus Fig. 1 mit schematisch gezeigten Milchbehältern und Milchleitungen,
- Fig. 3: zwei im Inneren des Beistellgerätes eingesetzte Vorratsbehälter mit bodenseitigen Kontakt- bzw. Kühlflächen und jeweils getrennten Kühlkreisläufen und
- Fig. 4: ein schematisches Fluiddiagramm einer Kühlvorrichtung für ein erfindungsgemäßes Beistellgerät.

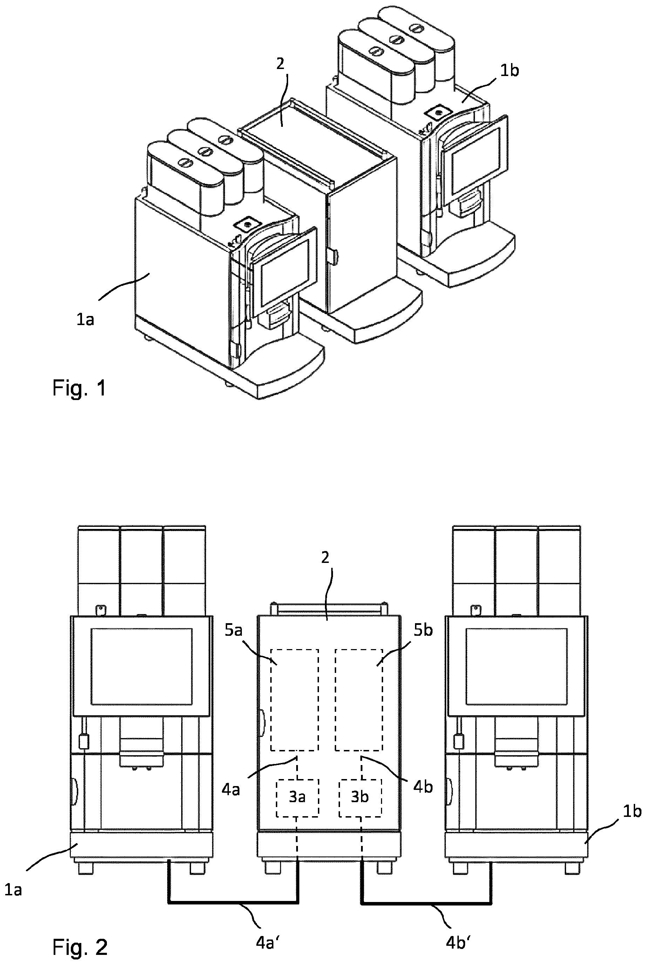

In Fig. 1 sind beispielhaft zwei Kaffeevollautomaten 1a, 1b sowie eine dazwischen aufgestellte dritte Einheit 2 in Form eines Beistellgerätes gezeigt. Bei dem Beistellgerät 2 handelt es sich um eine Kühleinheit, die zum Aufbewahren von gekühlter Milch für die Zubereitung von Kaffee- oder Milchgetränken mit warmer oder kalter Milch oder Milchschaum dient. Hierzu enthält die Kühleinheit 2 eine entsprechende Ausgabevorrichtung für Milchprodukte. Die Aufstellung des Beistellgerätes erfolgt mittig zwischen zwei Kaffeemaschinen. Alternativ kann das Beistellgerät natürlich auch als Unterthekeneinheit ausgebildet sein, d.h. auch eine unter der Theke oder anderweitig in räumlicher Nähe zu den Kaffeevollautomaten soll im erfindungsgemäßen Sinne als Beistellgerät verstanden werden.

Das Beistellgerät 2 ist elektronisch gesteuert und arbeitet mit der Steuerung der beiden Kaffeevollautomaten 1a, 1b zusammen. Beispielsweise kann eine Temperaturanzeige und Einstellung in der Kühltemperatur der Kühleinheit über das Display der Kaffeevollautomaten 1a, 1b erfolgen. Ebenso können die Leermeldung, Produktsperrung bei Milchmangel und ein Restmengenbezug von Milch-/Milchkaffeeprodukten nach der Leermeldung an den angeschlossenen Kaffeemaschinen 1a, 1b programmiert werden. Von einem Kaffeevollautomaten wird außerdem eine Anforderung an die Steuerung des Beistellgerätes gesendet, wenn Milch ausgegeben werden soll. Das Beistellgerät reagiert auf eine solche Anforderung, indem es mittels einer integrierten Milchpumpe über eine Milchleitung Milch zu dem betreffenden Kaffeevollautomaten fördert.

In Figur 2 ist eine Ansicht der Kaffeevollautomaten 1a, 1a und des Beistellgeräts 2 gezeigt. Das Beistellgerät 2 enthält zwei Hochleistungsmilchpumpen 3a, 3b; mit denen Milch aus jeweils einem Milchbehälter 5a, 5b über entsprechende Milchleitungen 4a, 4b, 4a', 4b' zu den beiden Kaffeevollautomaten 1a, 1b gefördert werden kann. Die Milchleitungen 4a, 4b führen jeweils von den Milchbehältern 5a, 5b zu den beiden Milchpumpen 3a, 3b und von dort als externe Leitungen 4a', 4b' weiter zu den beiden Kaffeevollautomaten 1a, 1b.

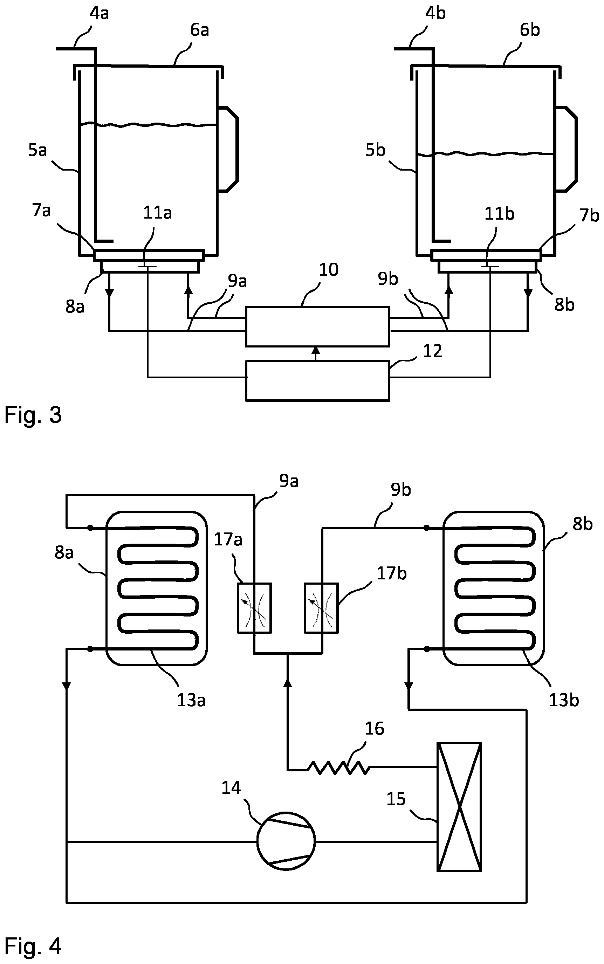

In Fig. 3 ist das "Innenleben" des Beistellgerätes 2 schematisch gezeigt. Im Aufnahmeraum des Beistellgerätes können zwei Milchbehälter 5a, 5b eingestellt werden. Die Milchbehälter 5a, 5b sind im Ausführungsbeispiel als nach oben hin offene und jeweils mit einem Deckel 6a, 6b versehene Behälter ausgebildet. Die Milchbehälter in Fig. 3 sind in unterschiedlicher Füllhöhe mit Milch befüllt. Durch den Deckel 6a, 6b führt jeweils die Ansaugleitung 4a, 4b in die Milchbehälter 5a, 5b hinein, über die von der zugehörigen Milchpumpe 3a, 3b Milch angesaugt und zu dem angeschlossenen Kaffeevollautomaten gefördert wird. Die Milchbehälter 5a, 5b können zur Befüllung aus dem Beistellgerät 2 herausgenommen und zur Reinigung beispielsweise in eine Spülmaschine gegeben werden.

Der Boden 7a, 7b der Milchbehälter 5a, 5b ist jeweils als wärmeleitende Außenwand ausgebildet und besteht zu diesem Zweck und aus hygienischen Gründen aus Edelstahl. Der Bodenbereich 7a, 7b kann außerdem verstärkt ausgeführt sein und zur Verbesserung der Wärmleitfähigkeit zusätzlich einen Kern aus hoch wärmeleitfähigem Material, beispielsweise Kupfer, aufweisen. Der übrige Bereich der Milchbehälter 5a, 5b kann dagegen in herkömmlicher Weise aus Kunststoff bestehen. Selbstverständlich kann auch der gesamte Milchbehälter 5a, 5b aus Edelstahl hergestellt sein.

Die Milchbehälter 5a, 5b stehen jeweils auf einer wärmeleitenden Kontaktplatte 8a, 8b. Die Kontaktplatten 8a, 8b werden über getrennte Kühlkreisläufe 9a, 9b von einer Kühlvorrichtung 10, beispielsweise einer Kompressionskältemaschine gekühlt. Die Kontaktplatten 8a, 8b können in gleicher Weise wie der Boden der Milchbehälter 5a, 5b aus Edelstahl oder einem anderen wärmeleitenden Metall bestehen. An beiden Kontaktplatten 8a, 8b ist jeweils ein Temperatursensor 11a, 11b angeordnet, und die Temperatursensoren 11a, 11b sind der mit einer Steuereinrichtung 12 signaltechnisch verbunden. In Abhängigkeit der von den Temperatursensoren 11a, 11b gemessenen Temperatur regelt die Steuereinrichtung 12 die Kühlvorrichtung 10 so, dass beide Kontaktplatten über die jeweiligen Kühlkreisläufe 9a, 9b auf die voreingestellte Soll-Temperatur gekühlt werden. Der wärmeleitende Boden 7a, 7b der Milchbehälter 5a, 5b ist in Größe und Form an die Kontaktplatten 8a, 8b angepasst, so dass ein guter Wärmeübergang gewährleistet ist. Die Bodenfläche 7a, 7b der Milchbehälter 5a, 5b ist im Ausführungsbeispiel geringfügig größer als die Standfläche der Kontaktplatten 8a, 8b, so dass stets ausreichend Kontakt zwischen Boden und Standfläche sichergestellt ist.

In Fig. 4 ist ein Flussdiagramm des Kühlkreislaufs gezeigt. Die Kontaktplatten 8a, 8b sind jeweils mit Kühlschlangen 13a, 13b versehen. Diese können entweder im Inneren der Kontaktplatten 8a, 8b integriert oder an der Unterseite der Kontaktplatten 8a, 8b befestigt sein. Beispielsweise können die Kühlschlangen 13a, 13b an der Unterseite der Kontaktplatten 8a, 8b angelötet sein. Die Kühlschlangen 13a, 13b dienen im Kühlmittelkreislauf als Verdampfer und werden von dem im Kühlkreislauf zirkulierenden und bei Durchströmen der Kühlschlangen 13a, 13b verdampfenden Kühlmittel gekühlt.

Über entsprechende Kühlmittelleitungen sind die Kühlschlangen 13a, 13b an einen als Verdichter arbeitenden Kompressor 14 angeschlossen, der das gasförmige Kühlmedium komprimiert und durch einen Kondensator 15 leitet. Dort kondensiert das Kühlmittel unter Wärmeabgabe. Die abgegebene Wärme wird beispielsweise über Kühlrippen an der Rückseite des Beistellgerätes 2 abgeführt. Das im Kondensator 15 verflüssigte Kühlmittel wird nun über eine Drossel 16, beispielsweise ein Kapillarrohr, entspannt. Hinter der Drossel 16 verzweigt sich die Kühlmittelleitung zu den beiden Kühlmittelkreisläufen 9a, 9b. In jedem der Kühlkreisläufe 9a, 9b ist ein Ventil 17a, 17b vorgesehen, mit welchem der betreffende Kühlkreislauf 9a, 9b abgesperrt werden kann.

Die Ventile 17a, 17b können hierbei wahlweise als reine Schließventile oder wie in Fig. 4 gezeigt als Drosselventile ausgeführt sein. In letzterem Fall kann nicht nur der betreffende Kühlkreislauf 9a, 9b abgesperrt sondern auch die Kühlmittelmenge reguliert werden. Die Ventile 17a, 17b werden über die in Fig. 3 gezeigte Steuereinheit 12 angesteuert, die auch den Kompressor 14 bei Bedarf anschaltet. Somit kann die Kühlleistung für die Kontaktplatten 8a, 8b getrennt geregelt werden. Ebenso ist es möglich, die Ventile 17a, 17b als ein gemeinsames Wege-Ventil auszuführen, mit dem wahlweise einer der beiden Kühlkreisläufe zugeschaltet oder abgetrennt werden kann.

Die Regelung erfolgt wie bereits erwähnt über die Steuereinheit 12 und Temperatursensoren 11a, 11b an den Kontaktplatten 8a, 8b. Als Temperatursensoren können beispielsweise temperaturabhängige Widerstandselemente wie etwa NTC- oder PTC-Elemente oder auch Halbleitertemperatursensoren eingesetzt werden.

Anstelle eines gemeinsamen Verdichters für die separaten Kühlkreisläufe kann selbstverständlich für jeden der Kühlkreisläufe ein separater Verdichter vorgesehen werden. Ebenso ist es möglich, einen gemeinsamen Kondensator für beide Kühlkreisläufe vorzusehen oder getrennte Kondensatoren pro Kühlkreislauf.

Neben einer Kompressionskältemaschine wie im Ausführungsbeispiel gezeigt kann die Kühlvorrichtung 10 auch mittels einer Absorptionskältemaschine an sich bekannter Bauart realisiert werden. Ebenso ist es möglich, die Kühlvorrichtung 10 mittels Peltier-Elemente, die nach dem thermoelektrischen Prinzip arbeiten, zu realisieren.

Für einen guten Wärmeübergang zwischen den Kontaktplatten 8a, 8b im Inneren des Kühlraumes des Beistellgerätes 2 und dem Bodenbereich 7a, 7b der Milchbehälter 5a, 5b sind diese in Form und Größe aneinander angepasst. Zusätzlich können Halteelemente, Führungsschienen oder dergleichen vorgesehen sein, um die Milchbehälter 5a, 5b in ihrer vorgegebenen Position gegenüber den Kontaktplatten 8a, 8b zu halten und zu arretieren. Des Weiteren können Andruckelemente wie Klammern, Federn oder dergleichen verwendet werden um die Milchbehälter 5a, 5b unter Vorspannung gegen die Kontaktplatten 8a, 8b zu halten.

Im Ausführungsbeispiel erfolgt die Wärmekopplung zwischen Kühlfläche und Vorratsbehälter über die Bodenfläche des Behälters. Es wäre aber genauso gut denkbar, dass die Wärmeableitung über eine Seitenwand des Behälters erfolgt.

Hierzu müsste lediglich an geeigneter Stelle im Kühlraum eine entsprechende wärmeleitende Kontaktfläche für den Vorratsbehälter vorgesehen und dessen zu der Kontaktfläche weisende Außenwand als Wärmeübergangsbereich ausgebildet werden.

Die Steuereinrichtung 12 kann in an sich bekannter Weise mit einem oder mehreren entsprechend programmierten Mikroprozessoren ausgebildet sein und über eine Kommunikationsschnittstelle mit Steuereinrichtungen der angeschlossenen Kaffeevollautomaten kommunizieren.

Die Milchbehälter 5a, 5b können zusätzlich mit Füllstandssensoren ausgestattet sein, so dass über die Steuereinrichtung 12 neben der Temperatur im Milchbehälter auch der Füllstand an die angeschlossenen Kaffeevollautomaten gemeldet werden kann.

## Patentansprüche

1. Beistellgerät für einen oder mehrere Getränkeausgabeautomaten (1a, 1b) mit einem Aufnahmeraum zum Einstellen von mindestens zwei Vorratsbehältern (5a, 5b) für flüssige Lebensmittel, insbesondere Milch, die über Lebensmittelleitungen (4a, 4b, 4a', 4b') mit dem oder den Getränkeausgabeautomaten (1a, 1b) verbindbar sind,
- wobei das Beistellgerät (2) eine Kühlvorrichtung (10) zum Temperieren von in den Vorratsbehältern (5a, 5b) eingefüllten flüssigen Lebensmitteln auf eine vorgebbare Temperatur aufweist,
- wobei das Beistellgerät (2) pro Lebensmittelbehälter (5a, 5b) je eine wärmeleitende insbesondere metallische Kontaktfläche (8a, 8b) aufweist, die bei eingestelltem Vorratsbehälter (5a, 5b) mit einer wärmeleitenden Außenwand (7a, 7b), insbesondere Bodenfläche, desselben in wärmeleitendem Kontakt steht, um den Inhalt des Vorratsbehälters (5a, 5b) zu kühlen; und
- wobei die wärmeleitenden Kontaktflächen (8a, 8b) jeweils über getrennt regelbare Kühlkreisläufe (9a, 9b) von der Kühlvorrichtung (10) gekühlt werden.

2. Beistellgerät nach Anspruch 1, bei dem jede der wärmeleitenden Kontaktflächen (8a, 8b) mit einem Temperatursensor (11a, 11b) zur Bestimmung der Ist-Temperatur im zugehörigen Lebensmittelbehälter (5a, 5b) versehen ist, über den eine Regelung einer der Kontaktfläche (8a, 8b) von der Kühlvorrichtung (10) zugeführten Kühlleistung erfolgt.

3. Beistellgerät nach Anspruch 1 oder 2, bei dem die Kühlvorrichtung (10) einen gemeinsamen Verdichter (14) für die getrennten Kühlkreisläufe (9a, 9b) und separate Verdampfer (13a, 13b) in den getrennten Kühlkreisläufen (9a, 9b) aufweist.

4. Beistellgerät nach einem der vorangehenden Ansprüche, welches eine Steuereinheit (12) aufweist, die mit einer korrespondierenden Steuereinheit der ein oder mehreren Getränkeausgabeautomaten (1a, 1b) verbindbar ist und die ein Signal zur Produktsperrung sendet, solange in einem zugehörigen Vorratsbehälter (5a, 5b) eine von einer vorgebbaren Solltemperatur abweichende Produkttemperatur herrscht und/oder wenn eine verbliebene Produktmenge eine vorgebbare Mindestmenge unterschreitet.

5. Beistellgerät nach einem der vorangehenden Ansprüche, bei dem eine Anzeigevorrichtung vorgesehen ist, auf welcher an den jeweiligen Kontaktflächen (8a, 8b) gemessene Ist-Temperaturwerte anzeigbar sind.

6. Beistellgerät nach einem der vorangehenden Ansprüche, welches für jeden der Vorratsbehälter (5a, 5b) eine Pumpe (3a, 3b) zum Fördern des flüssigen Lebensmittels aufweist.

7. Beistellgerät nach einem der vorangehenden Ansprüche, bei dem Halteelemente und/oder Andruckelemente vorgesehen sind, um die Vorratsbehälter (5a, 5b) gegen ihre zugehörigen Kontaktflächen (8a, 8b) zu halten.

8. Beistellgerät nach einem der vorangehenden Ansprüche, bei der zur getrennten Regelung der den Kontaktflächen (8a, 8b) zugeführten Kühlleistung die Kühlkreisläufe (9a, 9b) mit Ventilen (17a, 17b) versehen sind.

## Claims

1. Add-on unit for one or more automatic beverage dispensers (1a, 1b) having a receiving space for installation of at least two storage containers (5a, 5b) for liquid foodstuffs, especially milk, which are connectible to the automatic beverage dispenser(s) (1a, 1b) via foodstuff lines (4a, 4b, 4a', 4b'),
- wherein the add-on unit (2) has a cooling device (10) for regulating the temperature of liquid foodstuffs introduced into the storage containers (5a, 5b) to a specifiable temperature,
- wherein the add-on unit (2) has for each foodstuff container (5a, 5b) a heat-conducting, especially metallic, contact surface (8a, 8b) which, when the storage container (5a, 5b) is installed, is in heat-conducting contact with a heat-conducting outer wall (7a, 7b), especially a base surface, thereof in order to cool the contents of the storage container (5a, 5b); and
- wherein the heat-conducting contact surfaces (8a, 8b) are each cooled by the cooling device (10) by means of separately controllable cooling circuits (9a, 9b).

2. Add-on unit according to claim 1, wherein each of the heat-conducting contact surfaces (8a, 8b) is provided with a temperature sensor (11a, 11b) for determining the actual temperature in the associated foodstuff container (5a, 5b), by means of which temperature sensor the cooling power supplied by the cooling device (10) to a contact surface (8a, 8b) is controlled.

3. Add-on unit according to claim 1 or 2, wherein the cooling device (10) has a common compressor (14) for the separate cooling circuits (9a, 9b) and separate evaporators (13a, 13b) in the separate cooling circuits (9a, 9b).

4. Add-on unit according to any one of the preceding claims, which has a control unit (12) which is connectible to a complementary control unit of the one or more automatic beverage dispensers (1a, 1b) and which emits a signal for blocking delivery of product as long as a product temperature in an associated storage container (5a, 5b) differs from a specifiable desired temperature and/or if a remaining amount of product is less than a specifiable minimum amount.

5. Add-on unit according to any one of the preceding claims, wherein a display device is provided on which actual temperature values measured at the respective contact surfaces (8a, 8b) are displayable.

6. Add-on unit according to any one of the preceding claims, which has for each of the storage containers (5a, 5b) a pump (3a, 3b) for conveying the liquid foodstuff.

7. Add-on unit according to any one of the preceding claims, wherein holding elements and/or pressing elements are provided for holding the storage containers (5a, 5b) against their associated contact surfaces (8a, 8b).

8. Add-on unit according to any one of the preceding claims, wherein the cooling circuits (9a, 9b) are provided with valves (17a, 17b) for separately controlling the cooling power supplied to the contact surfaces (8a, 8b).

## Revendications

1. Appareil rapporté pour un ou plusieurs distributeurs automatiques de boissons (1a, 1b), avec un espace récepteur pour insérer au moins deux réservoirs (5a, 5b) de produits alimentaires liquides, en particulier de lait, qui peuvent être reliés par l'intermédiaire de conduites de produits alimentaires (4a, 4b, 4a', 4b') au ou aux distributeurs automatiques de boissons (1a, 1b),
- sachant que l'appareil rapporté (2) présente un dispositif de refroidissement (10) pour maintenir à une température pouvant être prédéfinie des produits alimentaires liquides remplis dans les réservoirs (5a, 5b),
- sachant que l'appareil rapporté (2) présente, pour chaque réservoir (5a, 5b) de produits alimentaires, une surface de contact thermoconductrice respective (8a, 8b), en particulier métallique, qui lorsque le réservoir (5a, 5b) est inséré se trouve en contact thermoconducteur avec une paroi extérieure thermoconductrice (7a, 7b), en particulier une surface de fond, de ce dernier, afin de refroidir le contenu du réservoir (5a, 5b) ; et
- sachant que les surfaces de contact thermoconductrices (8a, 8b) sont respectivement refroidies par le dispositif de refroidissement (10) par l'intermédiaire de circuits de refroidissement (9a, 9b) pouvant être séparément régulés.

2. Appareil rapporté selon la revendication 1, dans lequel chacune des surfaces de contact thermoconductrices (8a, 8b) est pourvue d'un capteur de température (11a, 11b) pour déterminer la température actuelle dans le réservoir associé (5a, 5b) de produits alimentaires, capteur par l'intermédiaire duquel s'effectue une régulation de la puissance de refroidissement apportée par le dispositif de refroidissement (10) à la surface de contact (8a, 8b).

3. Appareil rapporté selon la revendication 1 ou 2, dans lequel le dispositif de refroidissement (10) présente un compresseur commun (14) pour les circuits de refroidissement séparés (9a, 9b) et des évaporateurs séparés (13a, 13b) dans les circuits de refroidissement séparés (9a, 9b).

4. Appareil rapporté selon l'une des revendications précédentes, qui présente une unité de commande (12), qui peut être reliée à une unité de commande correspondante du ou des distributeurs automatiques de boissons (1a, 1b) et qui émet un signal pour bloquer le produit tant que règne dans un réservoir associé (5a, 5b) une température de produit différant d'une température de consigne pouvant être prédéfinie et/ou si une quantité résiduelle de produit devient inférieure à une quantité minimale pouvant être prédéfinie.

5. Appareil rapporté selon l'une des revendications précédentes, dans lequel il est prévu un dispositif d'affichage sur lequel peuvent être affichées des valeurs de température actuelle ou réelle mesurées sur les surfaces de contact respectives (8a, 8b).

6. Appareil rapporté selon l'une des revendications précédentes, qui présente pour chacun des réservoirs (5a, 5b) une pompe (3a, 3b) pour véhiculer le produit alimentaire liquide.

7. Appareil rapporté selon l'une des revendications précédentes, dans lequel il est prévu des éléments de maintien et/ou des éléments de pression d'application pour maintenir les réservoirs (5a, 5b) contre leurs surfaces de contact associées (8a, 8b).

8. Appareil rapporté selon l'une des revendications précédentes, dans lequel les circuits de refroidissement (9a, 9b) sont pourvus de soupapes (17a, 17b) pour la régulation séparée de la puissance frigorifique apportée aux surfaces de contact (8a, 8b).
